# EUROPEAN PATENT APPLICATION

(11) **EP 3 042 703 A1**
(43) Date of publication of application: **13.07.2016**
(21) Application number: 13892832.0
(22) Date of filing: 14.11.2013
(51) Int. Cl.: A63H 30/00

(54) **CONTROL DEVICE FOR CYBER-PHYSICAL SYSTEMS**

(30) Priority: 06.09.2013 RU 2013140990
(71) Applicant: Obshchestvo S Ogranichennoy Otvetstvennostyu "Kiberneticheskiye Tekhnologii", Pushkin, St. Petersburg 196606 (RU)
(72) Inventor: KRIVOSHEIN, Boris Nikolaevich, Petergof St. Petersburg 198504 (RU); LUCHIN, Roman Mikhaylovich, Pushkin St. Petersburg 196606 (RU)
(74) Representative: Chimini, Francesco
(86) International application number: PCT/RU2013/001015
(87) International publication number: WO 2015/034390

(57) **Abstract**

The present invention relates to the field of computer technology and automated control systems and will enable an increase in the quality and reliability of control in cyber-physical systems. The proposed device comprises a central digital processor, to which are connected a memory unit, a triple axis accelerometer and/or a triple axis gyroscope, an external device interface and a user interface. Connected to the central processor is a peripheral processor, to which in turn are connected means of an inter-face for controlling the equipment of a control object, and also user interface means.

## Description

This invention relates to the field of computer technology and automated control systems, primarily to the field of mobile robots management and unmanned aircrafts that provide motion control based on the processed data received from the devices connected to the unit, such as cameras, microphones, sensors measuring various physical parameters of the unit itself and its environment.

The closest analogue of this invention is the device for controlling movement of a robot described in patent US 2006279246 A1, published on Dec. 14, 2006. The device described in US 2006279246 A1 includes a central processing unit, which is connected to a random access memory and processor's controller; a processor's controller is connected to servo motor controller, communication control device, peripherals control device, and serial access memory unit. The known device can obviously be used to control almost any cyber-physical systems comprising a number of individual devices, or to control the single cyber-physical object. This single node of the controller which determines the control algorithms is the CPU and all other units included in the controller provide data processing and interaction with peripheral devices via predetermined (unchanged) protocols. The obvious drawback of this device is the lack of speed and a limited quality of objects control in conditions requiring the analysis of large volumes of data received by the sensors, combined with high speed and dynamics of mobile objects, such as unmanned aircrafts, mobile robots, moving in different environments, and other system integrated cyber-physical objects.

In its turn, the proposed invention will eliminate these disadvantages and provide higher reliability, performance and robust object control in cyber-physical systems using high computational complexity algorithms including adaptive adjustment algorithms, through CPU resources release and distribution of control functions among multiple computing subsystems. The technical result described above is achieved by using the proposed control device in cyber-physical systems or management of individual cyber-physical systems such as mobile robots and / or unmanned aircrafts. The proposed device includes a central processor unit, which is connected to a storage device; 3-axis accelerometer and/or 3-axis gyroscope; an interface for external devices and user interface. Unlike known solutions, the device contains the peripheral processing unit connected to the CPU and an interface for peripheral devices control connected to the peripheral processing unit, wherein the user interface is connected to the central processor unit and to the peripheral processor unit. The interface for peripheral devices control includes a number of the following (but not limited to): electric motors control unit; servo motors control unit, angular velocity control unit (encoders); electromagnetic sensors control unit; thermodynamic sensors control unit; location sensors control unit. The external devices interface include those selected from the list (but not limited to): means of connectivity and control of peripheral devices; means of connectivity and control of sensors; means of controllers connectivity; means of PC connectivity; means of video signal receiving; means of audio signal receiving. The user interface includes the means selected from the list (but not limited to): a display; light and/or sound indication equipment; WiFi/Bluetooth. The peripheral processing unit comprises means of control of electrical energy consumption by controlled objects.

The proposed device includes a CPU 1 with a memory unit (RAM, flash memory, SD card), which is connected (which is electrically connected) to the peripheral processing unit 2, 3-axis accelerometer 3, 3-axis gyro 4; external device interface 5 and user inter-face 6. The peripheral processing unit 2 is connected to the interface for management of equipment of controlled object 7, the user interface 6 is connected to the CPU 1 and peripheral processing unit 2. Accelerometer 3 and gyroscope 4 make it possible for the processing unit 1 to determine the position and trajectory of the device motion in space without connecting external devices. DC sources and batteries may be used for the electrical supply of the device.

Means of external device interface 5 may include different hardware which provides connectivity and control of peripheral devices (timers, pulse-width modulation signal ports, signal ports, extension slots, USB ports, etc.); connectivity and control of sensors (encoders, etc.); connectivity of external controllers; PC or other programmable terminals connectivity (UART port, etc.); receiving the video and audio signal from external devices.

User interface 6 may include a display; light and/or sound indication equipment; WiFi/Bluetooth, keyboard, etc. The specific choice of equipment of the external devices interface 5 and user devices will be determined by features of purpose and design of a particular cyber-physical object. The operator (user) can remotely control the device from a computer or mobile device interface via BlueTooth, as well as via Ethernet network using WiFi wireless interface. It is possible to control the device locally by keys and a touch screen, the keys are user-programmable.

Dedicated peripheral processing unit 2 provides control of the various means of control interface 7, i.e. it allows both to release CPU 1 resources to perform resource-intensive algorithms to analyze the whole volume of the data aggregated by the controller, as well as provide high dynamic of operational control of objects based on the instantaneous measures by sensors of values of physical quantities. Besides, the peripheral processing unit includes means for monitoring the consumption of electric power by controlled objects and protection of controlled objects from exceeding the allowable electric current levels. The distribution of control functions between the two processing units will enable use of sufficiently complex control algorithms to control cyber-physical objects without degrading the response time to external events and changes in environmental parameters. Tools of the interface of controlled object equipment control 7 may include various hardware / individual blocks and / or memory blocks that provides control of electric motors and / or actuators (power drivers of electric motors, current limiters); controls of angular velocity sensors (encoders); controls of electromagnetic sensor values (direction and intensity of the electromagnetic field, etc.); controls of sensors of the thermodynamic quantities (temperature, pressure, etc.); controls of location sensors (the rotation angle and the like). A specific set of control interface 7 means will be determined by the peculiarities of purpose and design of an unmanned aircraft, robot, or any other cyber-physical object.

The operation of the proposed device for the control of cyber-physical systems and objects can be explained through the description of the individual subsystems forming the device. These subsystems represent areas of CPU 1 and peripheral processing unit 2 memory and various purpose peripheral devices.

The proposed device for the control of cyber-physical systems / management of individual cyber-physical objects includes the following subsystems: central general control subsystem; video capture and processing subsystem (computer vision subsystem); audio capture and processing subsystem as well as audio output; subsystem for capturing and processing of data from analogue and digital sensors, local wireless subsystem; local management subsystem; subsystem of navigation devices control, long-distance wireless communications and radar subsystem; data storage subsystem; sub-system for motors and servos control; autonomous power subsystem.

The central general management subsystem provides centralized control of all subsystems of the controller and performs intellectual algorithms of processing data captured from the input subsystems, and performs adaptive control adjustment based on this analysis. The central subsystem provides stabilization in space for mobile robots and unmanned aircrafts, as well as for moving objects that do not have static steadiness (classical helicopters with a single main rotor, walking robots, two-wheeled self-propelled platforms (segways), etc.).

The video capture and processing subsystem (computer vision subsystem) provides device orientation in space, in conjunction with information obtained from other input channels and data analysis or independently. The object is reliably identified by given visual patterns and is identified by its relative position in space through the use of two parallel video streams input and algorithms of their simultaneous processing. Filtering and video compression is performed for further transmission over the wireless channel and/or saving in the internal storage.

Subsystem for capture, processing and the subsequent output of audio data provide reliable identification of objects based on a set of sound patterns using 2 parallel channels of audio input, in conjunction with information obtained from other input channels and data analysis or independently. It also provides sound output in accordance with a given program, including the exchange of information with the identified object.

The subsystem for capturing and processing data from analogue and digital sensors collects and analyzes navigation and telemetry data from the built-in 3-axis accelerometer, a gyroscope, external navigation systems and sensors.

Local wireless communications subsystem provides user interaction within range of the wireless WiFi and/or BlueTooth access points, including via the Internet.

The local control subsystem provides interaction with the user, including access networks outside the local wireless networks, using the buttons on the front panel and a touch screen.

Subsystem of navigation devices control, distance wireless communication and radar subsystems provide location orientation of the device, in conjunction with information obtained from other input channels and data analysis or independently. It also enables remote interaction with the user via external cellular and long-distance wereless communication devices (if available as part of the carrier device).

The data storage and registration subsystem provides storage of device control pro-gram, including executable binary code of all on-board subsystems. At the same time, the given program provides capture of audiovisual and telemetric data obtained in the course of autonomous work to a removable non-volatile memory unit.

Motor and servo control subsystem provides autonomous control of electric servos and motors based on commands and control parameters produced by the central general management subsystem. Besides, the servo and motor control subsystem performs step-by-step delivery of the unit or the payload to the target object, overcoming some parts of the route as the unmanned aircraft and other parts of the route as a mobile robot (wheeled, tracked or walking). The benefits of a step-by-step delivery are in weakening restrictions on working time in autonomous mode, as well as in increase of the possibility of delivery of the machine to the remote hard-to-reach objects.

Autonomous electric power subsystem provides power to all of the subsystems of the controller from low-voltage DC battery, the parameters of which can vary depending on the design and technical requirements to the controlled device.

These subsystems and hardware described above working together are used to input user programs that control the device via the connected computer or locally, including in-the-field conditions without any input devices and communication channels. An autonomous execution of the carrier device relocation task to the given destination point may be performed with its subsequent return. A search of still or moving objects by a set of features is performed in the given area within given range from still or moving object, providing a safe landing of an unmanned aircraft based on its technical characteristics, and the control of its landing. A reliable identification of a given object is per-formed based on feature sets determined by a video channel, an audio channel, additional channels of measurements provided by sensors and other external devices. Physical or informational interaction with a given object is performed after its identification, along with the live transfer of the audiovisual and telemetric information via the radio and its registration in built-in non-volatile memory unit.

Thus, the proposed is the control device for cyber-physical systems/control of individual cyber-physical objects, which provides reliable control and high speed performance, as well as allows the use of algorithms of high computational complexity.

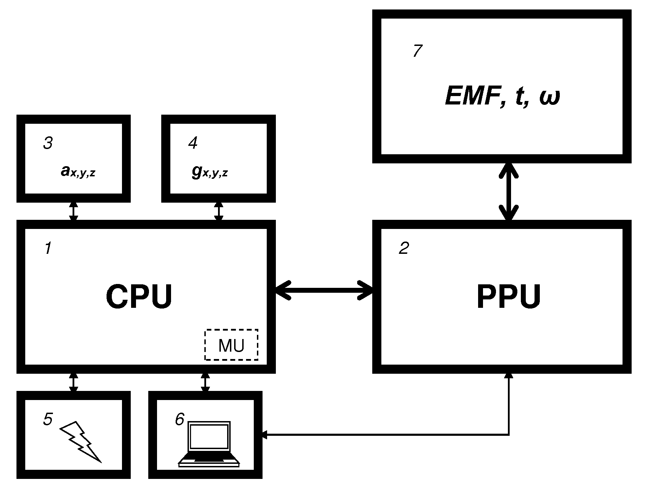

## Claims

1. Control device for objects control with the distribution of control functions and adaptive adjustment between a central processing unit and peripheral processing units in cyber-physical systems, **characterized by** comprising a central processing unit connected to a memory unit, 3-axis accelerometer and / or 3-axis gyroscope, external devices interfaces, the user interface and peripheral processing units, and the selected peripheral processing units are able to manage the control facilities, including the facilities controlling the energy consumption by the controlled objects and protecting the controlled objects from exceeding the permissible electric current levels, and the peripheral processing units are additionally connected to the user interface and the equipment control inter-face.

2. Control device according to claim 1, **characterized by** including, in the interface for controlling the equipment, means selected from the list (but not limited to) :
controls of electric motors;
controls of electric actuators;
controls of speed sensors (encoders);
controls of electromagnetic values sensors;
controls of thermodynamic values sensors;
controls of location sensors.

3. Control device according to claim 1, **characterized by** including, in the external device interface, means selected from the list (but not limited to):
means of peripherals connectivity and control;
means of sensors connectivity and control;
means of controllers connectivity;
means of PC connectivity;
means of receiving the video signal;
means of receiving an audio signal.

4. Control device according to claim 1, **characterized by** including, in the user interface, means selected from the list (but not limited to):
display;
light and/or sound indication equipment;
means for wireless connections.

5. Control device according to claim 1, **characterized by** including, in the peripheral processing units, means for the control of permissible operation modes of devices and connected equipment of a control object.

6. Control device according to claim 1, **characterized by** a connection of the user interface and / or external devices interface to the central processing unit and peripheral processing units.

7. Control device according to any one of the preceding claims, **characterized by** its use for controlling mobile robots and/or unmanned aircrafts.
